# DEMANDE DE BREVET EUROPEEN

(11) **EP 0 816 693 A1**
(43) Date de publication de la demande: **07.01.1998**
(21) Numéro de dépôt: 97410064.6
(22) Date de dépôt: 13.06.1997
(51) Int. Cl.: F16B 39/32

(54) **Procédé d'assemblage de tôles métalliques**

(30) Priorité: 24.06.1996 FR 9608035
(71) Demandeur: SCHNEIDER ELECTRIC SA, 92100 Boulogne Billancourt (FR)
(72) Inventeur: De Palma, François, 38050 Grenoble Cedex 09 (FR); Loiacono, Bernard, 38050 Grenoble Cedex 09 (FR)
(74) Mandataire: Ritzenthaler, Jacques

(57) **Abrégé**

Procédé d'assemblage de deux tôles métalliques consistant à introduire un organe de fixation dans un trou 12 des tôles 10 à assembler, et à effectuer l'assemblage par une opération de vissage ou de sertissage, le trou étant obtenu par une opération préalable de poinçonnage ou de découpe au laser en fonction de l'épaisseur et de la nature des tôles, ledit procédé étant caractérisé par les étapes suivantes :
- pratiquer dans la tôle supérieure 10, un trou 12 muni d'une pluralité d'ergots 14 d'ancrage répartis à intervalles réguliers le long de la périphérie 16 du trou 12, et faisant saillie vers l'intérieur,
- positionner les ergots 14 pour délimiter un orifice 20 interne coaxial avec le trou 12, le diamètre dudit orifice correspondant au diamètre de l'organe de fixation,
- pratiquer dans la tôle inférieure (10A) un trou correspondant à l'orifice 20.,
- utiliser un organe de fixation à tête tronconique fraisée destinée à coopérer avec les ergots 14 lors de l'enfoncement progressif de la tête dans le trou 12 pour créer une zone d'écrouissage avec une déformation permanente des ergots 14 sur la périphérie 16 du trou 12 de maniere à immobiliser en rotation ladite tête en fin d'opération d'assemblage.

Application : Pièce d'ossature d'une cellule ou armoire électrique.

## Description

L'invention est relative à un procédé d'assemblage de tôles métalliques consistant à introduire un organe de fixation dans un trou des tôles à assembler, et à effectuer l'assemblage par une opération de vissage ou de sertissage, le trou étant obtenu par une opération préalable de poinçonnage ou de découpe au laser en fonction de l'épaisseur et de la nature des tôles.

L'organe de fixation généralement utilisé pour réaliser l'assemblage de deux tôles superposées, peut être une vis, un goujon, un rivet. L'assemblage s'effectue par vissage ou sertissage, et l'organe de fixation, outre sa première fonction d'assemblage des deux tôles, possède une deuxième fonction de positionnement et de montage d'une pièce ou d'un accessoire sur les tôles assemblées. Pour bloquer en rotation l'organe de fixation dans le trou après l'assemblage, il est nécessaire d'utiliser des pièces d'assemblage spécifiques ayant des têtes ou des fûts hexagonaux ou moletés. Un sertissage correct avec l'usage de telles pièces nécessite d'autre part des opérations traditionnelles de fraisurage pour réaliser avec précision le trou selon des cotes prédéterminées. Le cycle de fabrication mettant en oeuvre ces techniques traditionnelles d'assemblages est long et onéreux.

L'objet de l'invention consiste à réaliser un procédé d'assemblage de tôles métalliques, destiné à simplifier le cycle de fabrication.

Le procédé selon l'invention est caractérisé par les étapes suivantes :
- pratiquer dans la tôle supérieure, un trou muni d'une pluralité d'ergots d'ancrage répartis à intervalles réguliers le long de la périphérie du trou, et faisant saillie vers l'intérieur,
- positionner les ergots pour délimiter un orifice interne coaxial avec le trou, le diamètre dudit orifice correspondant au diamètre de l'organe de fixation,
- pratiquer dans la tôle inférieure un trou correspondant audit orifice,
- utiliser un organe de fixation à tête tronconique fraisée destinée à coopérer avec les ergots lors de l'enfoncement progressif de la tête dans le trou, pour créer une zone d'écrouissage avec une déformation permanente des ergots sur la périphérie du trou de manière à immobiliser en rotation ladite tête en fin d'opération d'assemblage.

En plus de sa fonction d'assemblage des tôles, l'effet d'écrouissage obtenu par le refoulement du métal des ergots d'ancrage, assure simultanément le maintien de la tête de l'organe de fixation dans le trou. La tête tronconique est complètement noyée dans le trou, et reste bloquée en rotation une fois l'assemblage terminé.

La mise en oeuvre d'un tel procédé d'assemblage supprime les opérations de fraisurage (fraise, fôret, frappe) ce qui réduit le coût et le cycle de fabrication. La découpe des trous à ergots est obtenue directement par poinçonnage ou par laser.

Selon une caractéristique de l'invention, les ergots sont inclinés d'un angle prédéterminé par rapport à la direction radiale du trou. La tenue mécanique à l'arrachement des tôles assemblées est fonction de la forme et du nombre d'ergots d'ancrage.

D'autres avantages et caractéristiques ressortiront plus clairement de la description qui va suivre des différentes étapes du procédé, illustrées sur les dessins annexés dans lesquels :
- la figure 1 montre une vue partielle d'une tôle équipée d'un trou à ergots représenté dans la position initiale avant sertissage ou vissage;
- les figures 2 et 3 montrent les étapes de prépositionement de l'organe de fixation sur deux tôles à assembler, avant sertissage ou vissage;
- la figure 4 est une vue identique de la figure 3, après sertissage ou vissage de l'organe de fixation en fin d'opération d'assemblage;
- la figure 5 est une vue en plan de la figure 4;
- La figure 6 est une vue identique de la figure 1, après sertissage ou vissage, l'organe de fixation n'étant pas représenté.

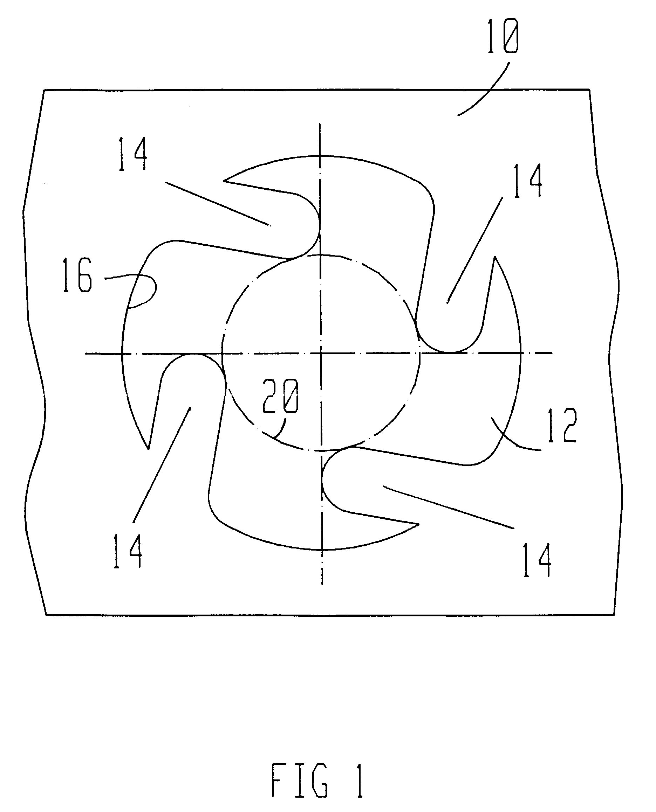

Sur les figures 1 et 2, la première phase du procédé d'assemblage consiste à pratiquer dans une tôle métallique 10, un trou 12 circulaire muni d'une pluralité d'ergots 14 d'ancrage répartis à intervalles réguliers le long de la périphérie 16 du trou 12. Les ergots 14 sont inclinés d'un angle prédéterminé par rapport à la direction radiale, et présentent des extrémités 18 arrondies délimitant un orifice 20 interne (en pointillé) coaxial avec le trou 12.

Le procédé d'assemblage fait usage d'un organe de fixation 22 à tête 24 fraisée circulaire ayant un diamètre sensiblement inférieur à celui du trou 12. L'organe de fixation 22 peut être constitué par une vis, un rivet ou un boulon, et est destiné à être introduit dans l'orifice 20 selon une direction perpendiculaire au plan de la tôle 10. La réalisation du trou 12 à ergots 14 peut être obtenue par une opération de poinçonnage dans le cas de tôles 10 de faibles épaisseurs, ou par découpage au laser pour des tôles métalliques plus épaisses. Le nombre des ergots 14, ainsi que leurs formes constituent les paramètres déterminant la tenue mécanique de l'assemblage, notamment la résistance à l'arrachement, et le blocage en rotation de l'organe de fixation 22.

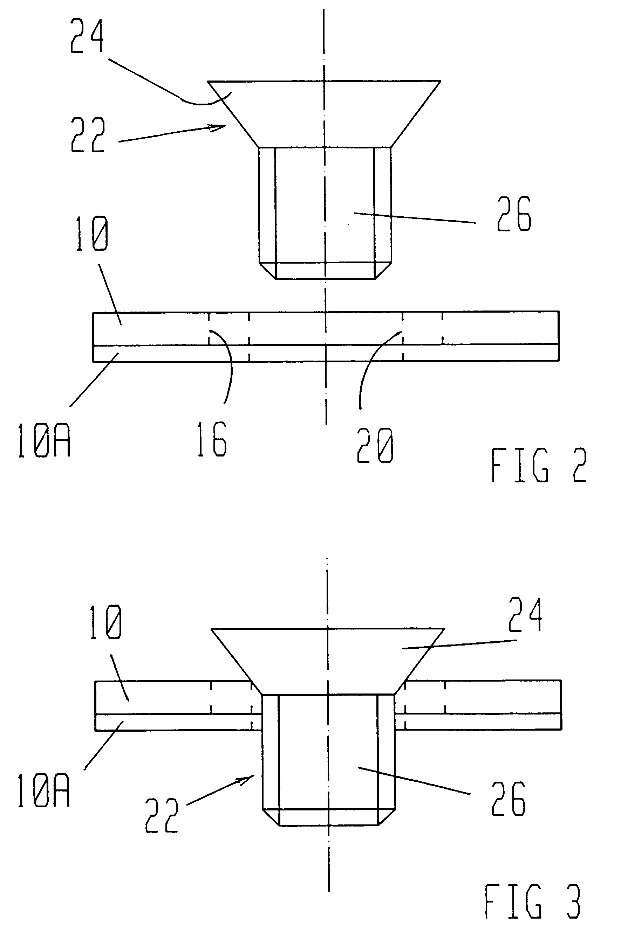

En référence aux figures 2 et 3, l'organe de fixation 22 est formé par une vis d'assemblage dont la tige 26 filetée possède une section correspondant au diamètre de l'orifice 20 interne.

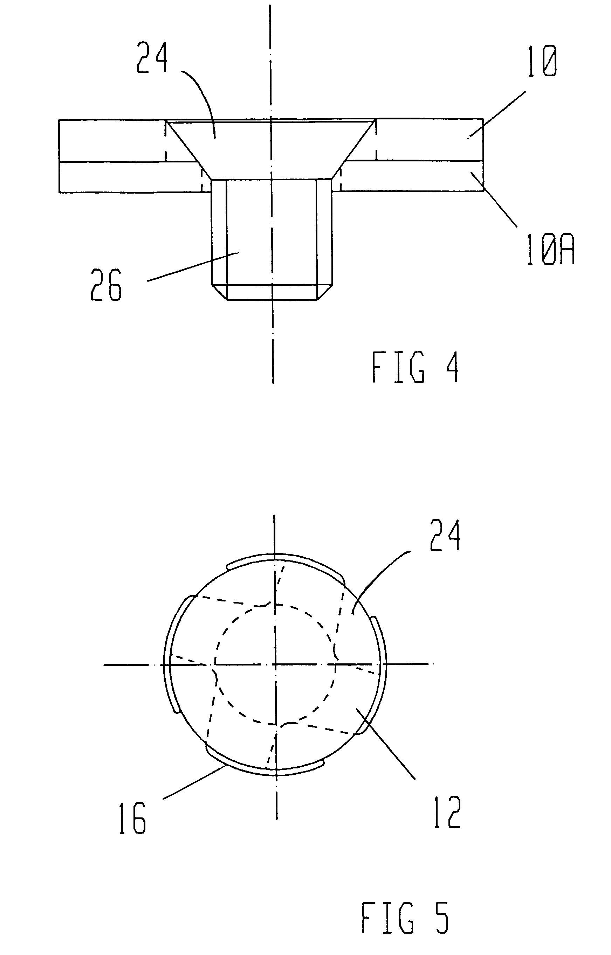

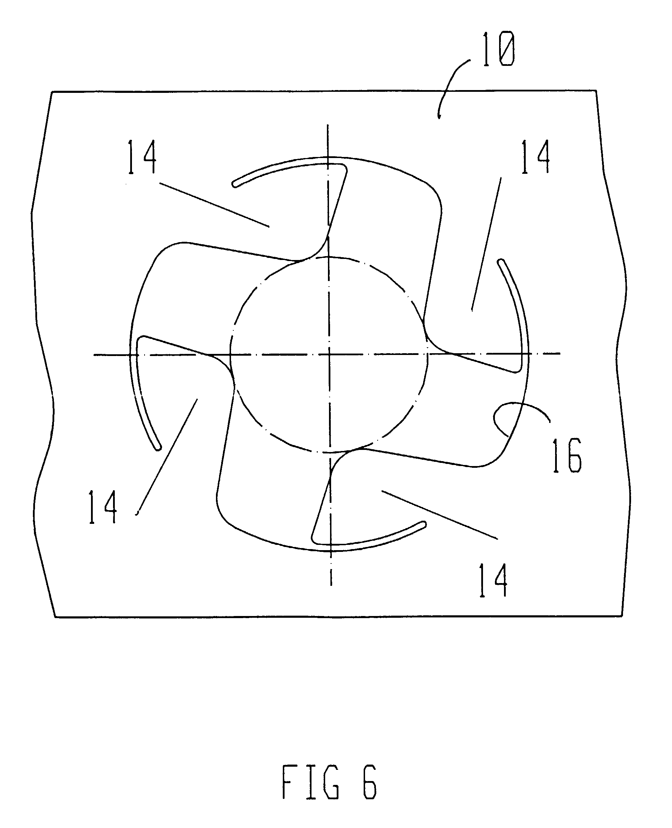

Le bout de la tige 26 est centré par les ergots 14 lors de son introduction dans les orifices 20 de deux tôles 10,10A superposées. La tôle inférieure 10A est dotée d'un trou correspondant à l'orifice 20 de la tôle supérieure 10. Le vissage de la vis amène la partie tronconique de la tête 24 en appui sur les ergots 14 (figure 3), et l'enfoncement progressif de la tête 24 déforme ensuite les ergots 14 par un effet de vrillage, entraînant un refoulement du métal. Il en résulte une zone d'écrouissage avec une déformation permanente des ergots 14 sur la périphérie 16 du trou 12 (figures 4 à 6).

Les tôles 10,10A sont alors assemblées l'une contre l'autre, avec incrustation des ergots 14 écrouis dans la tête 24 de la vis d'assemblage. La tête 24 est insérée totalement dans les tôles 10,10A et est de plus immobilisée en rotation en fin d'opération d'assemblage.

L'effet d'écrouissage est également obtenu lors du sertissage d'un rivet à tête cylindrique, laquelle sera bloquée en permanence en rotation une fois installée.

L'effet d'écrouissage des ergots 14 permet d'obtenir une tenue mécanique optimum à l'arrachement, indépendamment du type d'organes de fixation 22. Des essais de traction ont montré que l'assemblage résiste à des forces de l'ordre de 700 kg dans le cas d'une tôle de 4 mm, et d'une vis en acier de 6,5 mm de diamètre.

La forme de découpe des trous 12, et le nombre d'ergots 14 peuvent être choisis en fonction de la tenue mécanique souhaitée pour l'assemblage des tôles.

## Revendications

1. Procédé d'assemblage de deux tôles métalliques consistant à introduire un organe de fixation (22) dans un trou (12) des tôles (10,10A) à assembler, et à effectuer l'assemblage par une opération de vissage ou de sertissage, le trou étant obtenu par une opération préalable de poinçonnage ou de découpe au laser en fonction de l'épaisseur et de la nature des tôles, ledit procédé étant caractérisé par les étapes suivantes:
- pratiquer dans la tôle supérieure (10) un trou (12) muni d'une pluralité d'ergots (14) d'ancrage répartis à intervalles réguliers le long de la périphérie (16) du trou (12), et faisant saillie vers l'intérieur,
- positionner les ergots (14) pour délimiter un orifice (20) interne coaxial avec le trou (12), le diamètre dudit orifice correspondant au diamètre de l'organe de fixation (22),
- pratiquer dans la tôle inférieure (10A) un trou correspondant à l'orifice 20,
- utiliser un organe de fixation (22) à tête (24) tronconique fraisée destinée à coopérer avec les ergots (14) lors de l'enfoncement progressif de la tête dans le trou (12), pour créer une zone d'écrouissage avec une déformation permanente des ergots (14) sur la périphérie (16) du trou (12), de manière à immobiliser en rotation ladite tête en fin d'opération d'assemblage.

2. Procédé d'assemblage selon la revendication 1, caractérisé en ce que les ergots (14) sont inclinés d'un angle prédéterminé par rapport à la direction radiale du trou (12).

3. Procédé d'assemblage selon la revendication 1, caractérisé en ce que l'organe de fixation (22) est formé par une vis ou un goujon à tige (26) filetée.

4. Procédé d'assemblage selon la revendication 1, caractérisé en ce que l'organe de fixation (22) est constitué par un rivet.

5. Procédé d'assemblage selon la revendication 1, caractérisé en ce que la tenue mécanique à l'arrachement des tôles assemblées est fonction de la forme et du nombre d'ergots (14) d'ancrage.

6. Support métallique en tôle, notamment d'une cellule électrique, obtenu selon le procédé d'assemblage de l'une des revendications 1 à 5.
